(19) Europäisches Patentamt / European Patent Office / Office européen des brevets

(11) **EP 3 397 686 B1**

(12) **EUROPEAN PATENT SPECIFICATION**

(45) Date of publication and mention of the grant of the patent:
**05.02.2020 Bulletin 2020/06**

(21) Application number: **16831873.1**

(22) Date of filing: **29.12.2016**

(51) Int Cl.:
*C08L 7/00* (2006.01)   *B60C 1/00* (2006.01)
*C08K 3/04* (2006.01)   *C08L 9/00* (2006.01)
*B60C 11/00* (2006.01)   *C08F 36/08* (2006.01)
*C08K 3/08* (2006.01)   *C08L 9/06* (2006.01)
*C08F 36/06* (2006.01)

(86) International application number:
**PCT/US2016/069230**

(87) International publication number:
**WO 2017/117399 (06.07.2017 Gazette 2017/27)**

(54) **TIRE UNDERTREAD**

BASISGUMMI FÜR REIFEN

SOUS-COUCHE DE BANDE DE ROULEMENT DE PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2015 US 201562273996 P**

(43) Date of publication of application:
**07.11.2018 Bulletin 2018/45**

(73) Proprietor: **Compagnie Générale des Etablissements Michelin**
**63000 Clermont-Ferrand (FR)**

(72) Inventors:
• **STUBBLEFIELD, Raymond**
**Greenville, SC 29605 (US)**
• **PIFFARD, Olivier**
**Greenville, SC 29605 (US)**

(74) Representative: **Casalonga**
**Casalonga & Partners**
**Bayerstraße 71/73**
**80335 München (DE)**

(56) References cited:
**WO-A1-2014/105811   WO-A1-2014/184159**
**US-A1- 2015 191 586**

• **DATABASE WPI Week 201527 Thomson Scientific, London, GB; AN 2015-21578Q XP002768296, -& JP 2015 059181 A (YOKOHAMA RUBBER CO LTD) 30 March 2015 (2015-03-30)**
• **DATABASE WPI Week 201120 Thomson Scientific, London, GB; AN 2011-C29477 XP002768297, & JP 2011 046299 A (YOKOHAMA RUBBER CO LTD) 10 March 2011 (2011-03-10)**

EP 3 397 686 B1

**Description**

BACKGROUND OF THE INVENTION

Field of the Invention

This invention relates generally to rubber compositions and more particularly to rubber compositions useful for articles such as undertreads for tires.

Description of the Related Art

An undertread on a tire is the volume of rubber that is above the belt package but below the wear bars. It can be important for reducing the rolling resistance of the tire. Since the undertread is a part of the tread that will never contact the road, the traction and wear potential of this part of the tire is of no consequence. Therefore tire designers can make this tire component from a material different than the material used to make the road-contacting portion of the tire tread.

Tire designers therefore typically may form the undertread - for those tires that have one - with a material that is of low hysteresis to improve the rolling resistance properties of the tire. One tool used for providing a low hysteresis material is use of a rubber component having a low glass transition temperature, such as polybutadiene, and by a very low filler volume as compared to normal tread compound.

Because of the Payne effect, such low filler volumes result in a lower modulus at low strain levels and this has a negative impact on the handling characteristics of the tire. It would therefore be beneficial to find materials that would be useful for undertreads that could improve the hysteresis-rigidity compromise.

SUMMARY OF THE INVENTION

Particular embodiments of the present invention include rubber compositions and articles made from such compositions including a tire tread having an undertread. The undertread is made from rubber compositions that are based on a cross-linkable rubber composition that has a functionalized polybutadiene rubber functionalized with a moiety that interacts with the carbon black reinforcing filler. Additionally there may be a second rubber component. The cross-linkable rubber composition further includes a low-surface area, high structure carbon black having a nitrogen surface area of between 15 $m^2$/g and 25 $m^2$/g and a COAN of between 65 ml/100 g and 85 ml/100 g and a curing system.

It may be noted that particular embodiments of such rubber compositions may include between 40 phr and 80 phr of the carbon black.

DETAILED DESCRIPTION OF PARTICULAR EMBODIMENTS

Particular embodiments of the present invention include treads for tires, particularly the undertread, and materials from which they can be manufactured. The tires that have undertreads formed from the rubber compositions disclosed herein provide improved handling characteristics.

As used herein, "phr" is "parts per hundred parts of rubber by weight" and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

Reference will now be made in detail to embodiments of the invention. Each example is provided by way of explanation of the invention. For example, features illustrated or described as part of one embodiment can be used with another embodiment to yield still a third embodiment. It is intended that the present invention include these and other modifications and variations.

As noted above, particular embodiments of the present invention include undertreads and tires having treads with undertreads that are manufactured from a rubber composition that includes a functionalized polybutadiene rubber that is functionalized with a moiety that can interact with the carbon black reinforcement filler. In particular embodiments the functionalized polybutadiene rubber may be an end-functionalized polybutadiene rubber. Particular embodiments may include a tin-coupled amine end-functionalized polybutadiene. Additionally there may be a second rubber component. Such rubber compositions also include a particular carbon black used as a reinforcement filler in the rubber composition.

Polybutadiene rubber is a well-known rubber that is made by polymerizing the 1,3-butadiene monomer. Because of the two double bonds present in the butadiene monomer, the resulting polybutadiene may include three different forms: *cis*-1,4, *trans*-1,4 and *vinyl*-1,2 polybutadiene. The *cis*-1,4 and *trans*-1,4 elastomers are formed by the monomers connecting end-to-end while the *vinyl*-1,2 elastomer is formed by the monomers connecting between the ends of the monomer.

Functionalized rubbers, *i.e.,* those appended with active moieties, are well known in the industry. The elastomers may be functionalized by attaching these active moieties to the polymer backbone, along the branches of the polymer or at the branch ends of the polymer. Examples of functionalized elastomers include silanol or polysiloxane functionalized elastomers, examples of which may be found in US Patent No. 6,013,718. Other examples of functionalized elastomers include those having alkoxysilane groups as described in US 5,977,238, carboxylic groups as described in US 6,815,473, polyether groups as described in US 6,503,973 or amino groups as described in US 6,800,582. The functional groups are attached to the elastomers to provide interaction between the elastomer and the carbon black reinforcement filler.

In particular embodiments of the treads disclosed herein, the BR is a functionalized elastomer having functional moieties attached to at least a portion of the total number of branch ends or along the branches of the polymer. Such functional moieties may include, for example, amino groups, silanol groups, alkoxysilane groups, carboxylic groups or polyether groups. In particular embodiments, the functional moieties may be selected from amino groups, silanol groups or alkoxysilane groups. In particular embodiments, the functionalized BR may include a mixture of two or more different such functionalized BR's or limited to one of the functionalized BR's.

A tin coupled end-functionalized polybutadiene useful in embodiments of the rubber composition disclosed herein may be obtained by polymerizing the 1,3-butadiene monomers by a lithium initiator and then adding a tin compound as is well known in the art. The resulting polybutadiene is functionalized so that at least a portion of the ends of the chains are terminated with a tin-carbon bond. Typically initiating the polymerization reaction with the lithium initiator results in a polybutadiene having a low *cis*-1,4 content.

In particular embodiments of the rubber compositions disclosed herein, the tin atom content of the tin coupled end-functionalized polybutadiene may be greater than 30 ppm or greater than 50 ppm. Alternatively the tin atom content may be between 30 ppm and 500 ppm or alternatively, between 50 ppm and 400 ppm or between 60 ppm and 300 ppm. In other embodiments, the tin atom content may be greater or less than these alternative ranges depending upon the needs and anticipated use of the resulting rubber composition.

It may be noted that in particular embodiments the polydispersity index of the polybutadiene is less than 2.5 or alternatively less than 2, between 1 and 2.5 or between 1 and 2. The polydispersity index is defined as the ratio of the weight average molecular weight (Mw) to the number average molecular weight (Mn). As is well known, the Mw and the Mn may be determined relative to polystyrene standards using gel permeation chromatography (GPC).

A tin-coupled amine end-functionalized polybutadiene is available on the market, one example being NIPOL BR 1250H, available from Zeon Corporation with offices in Tokyo.

In addition to the functionalized polybutadiene, the rubber compositions disclosed herein may further include a second rubber component resulting at least in part, *i.e.,* a homopolymer or a copolymer, from diene monomers, *i.e.,* monomers having two double carbon-carbon bonds, whether conjugated or not.

These diene elastomers may be classified as either "essentially unsaturated" diene elastomers or "essentially saturated" diene elastomers. As used herein, essentially unsaturated diene elastomers are diene elastomers resulting at least in part from conjugated diene monomers, the essentially unsaturated diene elastomers having a content of such members or units of diene origin (conjugated dienes) that is at least 15 mol. %. Within the category of essentially unsaturated diene elastomers are highly unsaturated diene elastomers, which are diene elastomers having a content of units of diene origin (conjugated diene) that is greater than 50 mol. %.

Those diene elastomers that do not fall into the definition of being essentially unsaturated are, therefore, the essentially saturated diene elastomers. Such elastomers include, for example, butyl rubbers and copolymers of dienes and of alpha-olefins of the EPDM type. These diene elastomers have low or very low content of units of diene origin (conjugated dienes), such content being less than 15 mol. %.

Examples of suitable conjugated dienes include, in particular, 1,3-butadiene, 2-methyl-1,3-butadiene, 2,3-di($C_1$-$C_5$ alkyl)-1,3-butadienes such as, 2,3-dimethyl-1,3-butadiene, 2,3-diethyl-1,3-butadiene, 2-methyl-3-ethyl-1,3-butadiene, 2-methyl-3-isopropyl-1,3-butadiene, an aryl-1,3-butadiene, 1,3-pentadiene and 2,4-hexadiene. Examples of vinyl-aromatic compounds include styrene, ortho-, meta- and para-methylstyrene, the commercial mixture "vinyltoluene", para-tert-butylstyrene, methoxystyrenes, chloro-styrenes, vinylmesitylene, divinylbenzene and vinyl naphthalene.

The copolymers may contain between 99 wt% and 20 wt% of diene units and between 1 wt% and 80 wt% of vinyl-aromatic units. The elastomers may have any microstructure, which is a function of the polymerization conditions used, in particular of the presence or absence of a modifying and/or randomizing agent and the quantities of modifying and/or randomizing agent used. The elastomers may, for example, be block, random, sequential or micro-sequential elastomers, and may be prepared in dispersion or in solution; they may be coupled and/or starred or alternatively functionalized with a coupling and/or starring or functionalizing agent.

Examples of suitable diene elastomers include polyisoprenes and butadiene/styrene copolymers, particularly those having a styrene content of between 5 wt% and 50 wt% or of between 20 wt% and 40 wt% and in the butadiene faction, a content of 1,2-bonds of between 4 mol% and 65 mol%, a content of trans-1,4 bonds of between 20 mol% and 80 mol%. Also included are butadiene/isoprene copolymers, particularly those having an isoprene content of between 5 wt% and 90 wt% and a glass transition temperature (Tg, measured in accordance with ASTM D3418) of -40° C to -80° C.

Further included are isoprene/styrene copolymers, particularly those having a styrene content of between 5 wt% and 50 wt% and a Tg of between -25° C and -50° C. In the case of butadiene/styrene/isoprene copolymers, examples of those which are suitable include those having a styrene content of between 5 wt% and 50 wt% and more particularly between 10 wt% and 40 wt%, an isoprene content of between 15 wt% and 60 wt%, and more particularly between 20 wt% and 50 wt%, a butadiene content of between 5 wt% and 50 wt% and more particularly between 20 wt% and 40 wt%, a content of 1,2-units of the butadiene fraction of between 4 wt% and 85 wt%, a content of trans-1,4 units of the butadiene fraction of between 6 wt% and 80 wt%, a content of 1,2-plus 3,4-units of the isoprene fraction of between 5 wt% and 70 wt%, and a content of trans-1,4 units of the isoprene fraction of between 10 wt% and 50 wt%, and more generally any butadiene/styrene/isoprene copolymer having a Tg of between -20° C and -70° C.

In summary, suitable diene elastomers as the second rubber component for particular embodiments of the present invention include highly unsaturated diene elastomers such as polybutadienes (BR), polyisoprenes (IR), natural rubber (NR), butadiene copolymers, isoprene copolymers and mixtures of these elastomers. Such copolymers include butadiene/styrene copolymers (SBR), isoprene/butadiene copolymers (BIR), isoprene/styrene copolymers (SIR) and isoprene/butadiene/styrene copolymers (SBIR). In particular embodiments, the second rubber component is limited to NR.

Particular embodiments of the rubber compositions disclosed herein may include only one diene elastomer in addition to the functionalized BR and/or a mixture of several diene elastomers in addition to the functionalized BR. It may be noted that particular embodiments may contain only highly unsaturated elastomers with other types of elastomers being explicitly excluded.

Particular embodiments of the undertreads disclosed herein may be formed of a rubber composition having at least 20 phr of the functionalized polybutadiene rubber or alternatively at least 35 phr of the functionalized polybutadiene rubber. Embodiments may include, for example, between 20 phr and 80 phr, between 20 phr and 60 phr, between 30 phr and 50 phr or between 35 and 45 phr of the functionalized polybutadiene rubber. As noted above, in particular embodiments the second rubber component making up the rubber composition may be limited to natural rubber. In particular embodiments the functionalized BR may be limited to just a tin coupled end-functionalized polybutadiene rubber such as the tin coupled amine end-functionalized polybutadiene.

In addition to the functionalized polybutadiene and the second rubber component discussed above, the rubber compositions disclosed herein further include a high structure, low surface area carbon black. It has been found that the combination of the tin end-functionalized polybutadiene and the high structure, low surface area carbon black provide the higher rigidity and lower hysteresis that are sought as desirable characteristics in the undertreads.

Carbon black may best be described as being made up of very fine particulate aggregates wherein the very fine particles are fused together to form the aggregates. The aggregates that are formed by these very fine particles can vary greatly between the different types of carbon blacks. Those blacks having aggregates that have a higher particle count with the particles joined into more chain-like clusters having a narrow core, often with random branching, are characterized as having a higher structure as compared to those in general having a lower particle count, less branched and more compact.

Common properties that are measured and are useful in describing a carbon black include surface area measurements, which are indicative of the particle size and the oil adsorption number (OAN) that is indicative of the structure of the carbon black. A similar test may be performed on a compressed sample of carbon black (COAN) that also provides an indication of the structure of the black. Another common indication of surface area is the iodine number that is a measurement of the adsorption of iodine by the carbon black that provides the measure of the surface area.

One known method of determining the surface area of a carbon black is the ASTM Standard D6556 for determining the total and external surface area by nitrogen adsorption. A method for determining the oil adsorption number is the ASTM Standard D2414 for determining the oil adsorption number using dibutyl phthalate while ASTM Standard D3493 is the standard test for determining the COAN of a carbon black. The iodine number may be determined by ASTM Standards D1510.

The high structure, low surface area carbon black that is included in particular embodiments of the rubber compositions disclosed herein may be characterized as having a nitrogen surface area as determined using the ASTM Standard D6556 test method of between 15 $m^2$/g and 25 $m^2$/g or alternatively, between 17 $m^2$/g and 22 $m^2$/g. These surface areas are typical for carbon blacks having a low surface area.

In addition to having a low surface area, these carbon blacks useful as the first carbon black for the rubber compositions disclosed herein are also characterized as being of high structure. Useful carbon blacks may further be characterized as having an OAN as determined by ASTM D2414 of between 100 ml/100 g and 150 ml/100 g or alternatively, between 110 ml/100 g and 150 ml/100 g, between 120 ml/100 g and 150 ml/100 g, between 125 ml/100 g and 145 ml/100 g or between 130 ml/100 g and 140 ml/100 g.

In particular embodiments of the rubber compositions disclosed herein, these high-structure, low-surface area carbon blacks may be further characterized as having a COAN as determined by ASTM D3493-09 of between 65 ml/100 g and 85 ml/100 g or alternatively between 70 ml/100 g and 80 ml/100 g.

Useful high-structure, low-surface area carbon blacks for particular embodiments of the rubber compositions disclosed herein may be characterized as having a nitrogen surface area in a range as disclosed above and either a COAN in a range as described above or an OAN in a range as described above to provide a carbon black that may be characterized as having both a low-surface area and a high structure. In other particular embodiments, useful carbon blacks may be characterized as having each of the above characteristics, *i.e.,* nitrogen surface area, OAN and COAN, within a range as described above.

Surface activity of a carbon black may also be indicated by the difference between the nitrogen surface area and the iodine number (ASTM D1510). The iodine number is a measurement of the adsorption of iodine by the carbon black and is also used as a measure of the surface area. Higher activity blacks tend to have a positive difference while less active blacks tend to have a negative number. In particular embodiments, the high-structure, low surface area carbon blacks may have an iodine number of between 10 mg/g and 25 mg/g or alternatively between 15 mg/g and 23 mg/g or 18 mg/g and 21 mg/g and as such may, in particular embodiments, have such difference as positive or alternatively as close to positive. The iodine number may be useful, therefore, to further characterize any of the above described high-structure, low-surface area carbon blacks.

An example of a suitable high-structure, low-surface area carbon black that is available on the market is S204, available from Orion Engineered Carbon with offices in Kingwood, Texas. This carbon black has a nitrogen surface area of 19 $m^2$/g, an OAN of 138 ml/100 g, a COAN of 76 ml/ 100 g and an iodine number of 19.6 mg/g.

Particular embodiments of the disclosed rubber compositions may include between 40 phr and 80 phr of the high structure, low surface area carbon black or alternatively between 50 phr and 70 phr or between 55 phr and 65 phr of the carbon black. It is recognized that other loadings may be desirable if, for example, a more rigid material is desired and an increased hysteresis property can be tolerated.

Particular embodiments of the rubber compositions disclosed herein may include other components known to those skilled in the art such as, for example, curing agents, various processing aids, antidegradants, antioxidants or combinations thereof in quantities as known to those having ordinary skill in the art. Curing agents that may be included in the elastomer composition of the present invention include, for example, sulfur, sulfur donors, activators, accelerators, peroxides, and other systems used to effect vulcanization of the elastomer composition.

The rubber compositions that are disclosed herein may be produced in suitable mixers, such as internal mixers or extruders, in a manner known to those having ordinary skill in the art. Typically two successive preparation phases may be utilized, a first phase of thermo-mechanical working at a high temperature followed by a second phase of mechanical working at a lower temperature.

The first phase of thermo-mechanical working (sometimes referred to as the "non-productive" phase) is intended to mix thoroughly, by kneading, the various ingredients of the compositions with the exception of the vulcanization system, particularly the vulcanizing agents. It is carried out in a suitable mixer until, under the action of the mechanical working and the high shearing imposed on the mixture, a maximum temperature is reached, generally between 120 °C and 190 °C or more narrowly, between 130 °C and 170 °C.

After cooling the mixture, a second phase of mechanical working is implemented at a lower temperature. Sometimes referred to as the "productive" phase, this finishing phase consists of incorporation by mixing the vulcanization system, in a suitable device such as an open mill. It is performed for an appropriate time, typically between one and thirty minutes, for example between two and ten minute, and at a sufficiently low temperature lower than the vulcanization temperature of the mixture so as to protect against premature vulcanization.

After the mixing is complete, the rubber composition can be formed into useful articles, including the sidewall supports of run-flat tires. After being formed into its initial shape for being incorporated into the tire and then being incorporated into the tire during the tire building process, the tire is then cured, typically under heat and pressure, to produce the run-flat tire product having a sidewall support insert.

The invention is further illustrated by the following examples, which are to be regarded only as illustrations and not delimitative of the invention in any way. The properties of the compositions disclosed in the examples were evaluated as described below and these utilized methods are suitable for measurement of the claimed properties of the present invention.

Modulus of elongation (MPa) was measured at 300% (MA300) at a temperature of 23 °C based on ASTM Standard D412 on dumb bell test pieces. The measurements were taken in the second elongation; *i.e.,* after an accommodation cycle. These measurements are secant moduli in MPa, based on the original cross section of the test piece.

Hysteresis losses (HL) were measured in percent by rebound at 60 °C at the sixth impact in accordance with the following equation:

$$HL\ (\%) = 100\ (W_0 - W_1)/W_1,$$

where $W_0$ is the energy supplied and $W_1$ is the energy restored.

The rolling resistance of each of the tires tested was measured by running on a test drum, at an ambient temperature of 25 °C, in accordance with ISO 8767 (1992).

The maximum tan delta dynamic properties for the rubber compositions were measured at 23° C on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress at a frequency of 10 Hz under a controlled temperature of 23° C. Scanning was effected at an amplitude of deformation of 0.05 to 50 % (outward cycle) and then of 50 % to 0.05% (return cycle). The maximum value of the tangent of the loss angle tan delta (max tan δ) was determined during the return cycle. The complex shear modulus G* was determined at 10% strain during the return cycle.

Dynamic properties (Tg and G*) for the rubber compositions were measured on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress of a constant 0.7 MPa and at a frequency of 10 Hz over a temperature sweep from -60° C to 100° C with the temperature increasing at a rate of 1.5° C/min. The shear modulus G* at 60° C was captured and the temperature at which the max tan delta occurred was recorded as the glass transition temperature, Tg.

Example 1

Rubber compositions were prepared using the components shown in Table 1. The amount of each component making up the rubber compositions shown in Table 1 are provided in parts per hundred parts of rubber by weight (phr). The tin/amine end-functionalized polybutadiene fBR was NIPOL BR 1250H obtained from Zeon Corporation and had a cis-1,4 content of about 35 %.

The high-structure, low-surface area carbon black was S204 obtained from Orion Engineered Carbon. It had a nitrogen surface area of 19 $m^2$/g, an OAN of 138 ml/100 g, a COAN of 76 ml/ 100 g and an iodine number of 19.6 mg/g.

Table **1** - Rubber Formulations

| | W1 | W2 | F1 |
|---|---|---|---|
| **Formulations** | | | |
| Natural Rubber | 60 | 100 | 60 |
| BR | 40 | | |
| fBR | | | 40 |
| N650 | 60 | | |

(continued)

| | W1 | W2 | F1 |
|---|---|---|---|
| **Formulations** | | | |
| N772 | | 45 | |
| S204 | | | 60 |
| Plasticizing Resin | | 3 | |
| 6PPD | 1.3 | 1 | 1.3 |
| Curing Package | 7.5 | 6 | 7.5 |
| | | | |
| **Physical Properties** | | | |
| MA10 @ 23° C (MPa) | 6.5 | 3.1 | 6.1 |
| MA100 @ 23° C (MPa) | 4.1 | 1.8 | 3.8 |
| P60, Hysteresis Loses, % | 11.5 | 7.1 | 7.9 |
| Max Tan Delta @ 23° C | 0.10 | 0.07 | 0.07 |
| Modulus G* @ 10% | 2.5 | 1.1 | 2.0 |

The cure package included accelerators, stearic acid, zinc oxide and insoluble sulfur.

The rubber compositions were prepared in a Banbury mixer by mixing the components given in Table **1,** except for the cure package, in a mixer until all components were well dispersed and a temperature of between 130 °C and 170 °C was reached. The cure package was added in a second phase on a mill. Curing was effected at 150 °C for twenty-five minutes. The rubber compositions were then tested and the results are shown in Table **1.**

As can be seen, by using the functionalized BR and the high structure, low surface area carbon black, the compromise between rigidity and hysteresis was broken.

Example **2**

Tires were built using the rubber compositions described as above as W**2** and F**1** as the undertread of the tires. The tire performance data is provided in Table **2.** The measurements of cornering stiffness are obtained using a machine equipped with a rolling road and with a device for measuring the transverse forces applied to the tire, depending on the load.

These measurements were carried on a tire sized 2015/55R 16, mounted on a rim and inflated to 2.5 bar and subjected to a load of 483 daN. The tire was subjected to a speed of 80 kn/h with a cornering angle of +/- 1 degree.

Table **2** - Tire Results

| | W2 | F1 |
|---|---|---|
| **Formulations** | | |
| Rolling Resistance, kg/t | 5.9 | 6.0 |
| KI, N/deg/kN | 310 | 349 |
| Cornering Stiffness | 100 | 113 |

As demonstrated by the tire results, the cornering stiff of the tire was significantly improved with practically no impact on the rolling resistance of the tire.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

**Claims**

1. A tread for a tire that comprises an undertread, the undertread formed from a rubber composition that is based upon a cross-linkable rubber composition, the cross-linkable composition comprising, per 100 parts by weight of rubber (phr):

   at least 20 phr of a functionalized polybutadiene rubber having a functional group that is capable of interacting with carbon black;
   between 0 phr and 80 phr of a second rubber component;
   a low-surface area, high structure carbon black having a nitrogen surface area of between 15 m$^2$/g and 25 m$^2$/g and a COAN of between 65 ml/100 g and 85 ml/100 g; and
   a curing system.

2. The tread of claim 1, wherein the functionalized polybutadiene rubber is a tin coupled end-functionalized polybutadiene rubber.

3. The tread of claim 2, wherein the polybutadiene rubber is end-functionalized with an amine group.

4. The tread of any of claims 1 through 3, wherein the cross-linkable rubber composition comprises between 40 phr and 80 phr of the carbon black.

5. The tread of claim 4, wherein an OAN of the carbon black is between 100 ml/100 g and 150 ml/100 g.

6. The tread of claim 5, wherein an iodine number of the carbon black is between 10 mg/g and 25 mg/g.

7. The tread of any of claims 1-3, 5-6, wherein the cross-linkable rubber composition comprises between 20 phr and 60 phr of the functionalized polybutadiene rubber.

8. The tread of claim 7, wherein the cross-linkable rubber composition comprises between 30 phr and 50 phr of the functionalized polybutadiene rubber.

9. The tread of claim 1, wherein the second rubber component is selected from polybutadienes (BR), polyisoprenes (IR), natural rubber (NR), butadiene copolymers, isoprene copolymers and mixtures of these elastomers.

10. The tread of claim 9, wherein the second rubber component is natural rubber.

11. The tread of claim 1, wherein the cross-linkable rubber composition comprises as rubber components only the functionalized polybutadiene rubber and the second rubber component.

**Patentansprüche**

1. Lauffläche für einen Reifen, die einen Basisgummi umfasst, wobei der Basisgummi aus einer Kautschukzusammensetzung gebildet ist, die auf einer vernetzbaren Kautschukzusammensetzung basiert, wobei die vernetzbare Zusammensetzung, pro 100 Gewichtsteile Kautschuk (phr), Folgendes umfasst:

   mindestens 20 phr eines funktionalisierten Polybutadienkautschuks mit einer funktionellen Gruppe, die mit Ruß wechselwirken kann;
   zwischen 0 phr und 80 phr einer zweiten Kautschukkomponente;
   einen hochstrukturierten Ruß mit kleiner Oberfläche, der eine Stickstoffoberfläche zwischen 15 m$^2$/g und 25 m$^2$/g und einen COAN-Wert zwischen 65 ml/100 g und 85 ml/100 g besitzt; und

ein Härtungssystem.

**2.** Lauffläche nach Anspruch 1, wobei es sich bei dem funktionalisierten Polybutadienkautschuk um einen Zinn-gekuppelten endfunktionalisierten Polybutadienkautschuk handelt.

**3.** Lauffläche nach Anspruch 2, wobei der Polybutadienkautschuk mit einer Amingruppe endfunktionalisiert ist.

**4.** Lauffläche nach einem der Ansprüche 1 bis 3, wobei die vernetzbare Kautschukzusammensetzung zwischen 40 phr und 80 phr Ruß umfasst.

**5.** Lauffläche nach Anspruch 4, wobei ein OAN-Wert des Rußes zwischen 100 ml/100 g und 150 ml/100 g liegt.

**6.** Lauffläche nach Anspruch 5, wobei eine lodzahl des Rußes zwischen 10 mg/g und 25 mg/g liegt.

**7.** Lauffläche nach einem der Ansprüche 1-3, 5-6, wobei die vernetzbare Kautschukzusammensetzung zwischen 20 phr und 60 phr funktionalisierten Polybutadienkautschuk umfasst.

**8.** Lauffläche nach Anspruch 7, wobei die vernetzbare Kautschukzusammensetzung zwischen 30 phr und 50 phr funktionalisierten Polybutadienkautschuk umfasst.

**9.** Lauffläche nach Anspruch 1, wobei die zweite Kautschukkomponente aus Polybutadienen (BR), Polyisoprenen (IR), Naturkautschuk (NR), Butadiencopolymeren, Isoprencopolymeren und Mischungen dieser Elastomere ausgewählt ist.

**10.** Lauffläche nach Anspruch 9, wobei es sich bei der zweiten Kautschukkomponente um Naturkautschuk handelt.

**11.** Lauffläche nach Anspruch 1, wobei die vernetzbare Kautschukzusammensetzung als Kautschukkomponenten nur den funktionalisierten Polybutadienkautschuk und die zweite Kautschukkomponente umfasst.

**Revendications**

**1.** Bande de roulement pour un pneumatique qui comprend une sous-bande de roulement, la sous-bande de roulement étant formée à partir d'une composition de caoutchouc qui est basée sur une composition de caoutchouc réticulable, la composition réticulable comprenant, pour 100 parties en poids de caoutchouc (phr) :

au moins 20 phr d'un caoutchouc polybutadiène fonctionnalisé comportant un groupe fonctionnel qui est capable d'interagir avec du noir de carbone ;
entre 0 phr et 80 phr d'un second composant caoutchouc ;
un noir de carbone hautement structuré à faible superficie, ayant une superficie, mesurée par adsorption d'azote, comprise entre 15 m$^2$/g et 25 m$^2$/g et un indice COAN compris entre 65 ml/200 g et 85 ml/100 g : et
un système durcisseur.

**2.** Bande de roulement selon la revendication 1, dans laquelle le caoutchouc polybutadiène fonctionnalisé est un caoutchouc polybutadiène fonctionnalisé en bout de chaîne, couplé à l'étain.

**3.** Bande de roulement selon la revendication 2, dans laquelle le caoutchouc polybutadiène est fonctionnalisé en bout de chaîne avec un groupe amine.

**4.** Bande de roulement selon l'une quelconque des revendications 1 à 3, dans laquelle la composition de caoutchouc réticulable comprend entre 40 phr et 80 phr du noir de carbone.

**5.** Bande de roulement selon la revendication 4, dans laquelle un indice OAN du noir de carbone est compris entre 100 ml/100 g et 150 ml/100 g.

**6.** Bande de roulement selon la revendication 5, dans laquelle un indice d'iode du noir de carbone est compris entre 10 mg/g et 25 mg/g.

**7.** Bande de roulement selon l'une quelconque des revendications 1 à 3, 5 et 6, dans laquelle la composition de caoutchouc réticulable comprend entre 20 phr et 60 phr du caoutchouc polybutadiène fonctionnalisé.

**8.** Bande de roulement selon la revendication 7, dans laquelle la composition de caoutchouc réticulable comprend entre 30 phr et 50 phr du caoutchouc polybutadiène fonctionnalisé.

**9.** Bande de roulement selon la revendication 1, dans laquelle le second composant caoutchouc est choisi parmi les polybutadiènes (BR), les polyisoprènes (IR), le caoutchouc naturel (NR), les copolymères de butadiène, les copolymères d'isoprène et des mélanges de ces élastomères.

**10.** Bande de roulement selon la revendication 9, dans laquelle le second composant caoutchouc est du caoutchouc naturel.

**11.** Bande de roulement selon la revendication 1, dans laquelle la composition de caoutchouc réticulable comprend comme composants caoutchouc seulement le caoutchouc polybutadiène fonctionnalisé et le second composant caoutchouc.

**EP 3 397 686 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6013718 A
- US 5977238 A
- US 6815473 B
- US 6503973 B
- US 6800582 B